Europäisches Patentamt

(19) European Patent Office

Office européen des brevets

(11) Publication number : **0 281 615 B1**

(12) # EUROPEAN PATENT SPECIFICATION

(45) Date of publication of patent specification :
**11.09.91 Bulletin 91/37**

(21) Application number : **87906227.1**

(22) Date of filing : **24.07.87**

(86) International application number :
**PCT/US87/01781**

(87) International publication number :
**WO 88/02155 24.03.88 Gazette 88/07**

(51) Int. Cl.⁵ : **G06F 15/72**

(54) **SCENOGRAPHIC PROCESS AND PROCESSOR FOR FAST PICTORIAL IMAGE GENERATION.**

(30) Priority : **11.09.86 US 925856**

(43) Date of publication of application :
**14.09.88 Bulletin 88/37**

(45) Publication of the grant of the patent :
**11.09.91 Bulletin 91/37**

(84) Designated Contracting States :
**CH DE FR GB IT LI SE**

(56) References cited :
**FR-A- 2 553 543
GB-A- 2 061 074
GB-A- 2 113 056
Proceedings of the IEEE National Aerospace
and Electronics Conference, NAECON 1984,
21-25 May 1984, volume 2 of 2, IEEE, (US), O.
Marvel et al.: "Image synthesization for simu-
lation, and training", pages 884-890**

(73) Proprietor : **Hughes Aircraft Company
7200 Hughes Terrace P.O. Box 45066
Los Angeles, California 90045-0066 (US)**

(72) Inventor : **ELLIS, Thomas, O.
8119 Billow Vista Drive
Playa del Rey, CA 90291 (US)**
Inventor : **ROSMAN, Andrew
2911 Aceca
Los Alamitos, CA 90720 (US)**
Inventor : **YANG, Chao, K.
12040 E. Eastman Street
Cerritos, CA 90701 (US)**

(74) Representative : **Kuhnen, Wacker & Partner
Schneggstrasse 3-5 Postfach 1553
W-8050 Freising (DE)**

## Description

BACRGROUND OF THE INVENTION

This invention relates generally to image generation and more particularly to image generation systems which incorporate computer processing of stored imagery data.

In many applications such as visual simulators, flight simulators and trainers a need exists to produce realistic (near photographic quality) images or scenes at frame rates sufficient to create the appearance of continuous motion.

One type of image generation system is based on a data base of interconnected flat polygon descriptions of objects comprising the scenery with monocolor, smooth shaded and textured polygons. These systems produce cartoon-like images and data bases being largely hand composed are expensive to create and excessively large if attempting to reproduce the true complexity of real nature.

Another image generation approach involves voxel (data base descriptor elements) or gridded data bases however for image quality and frame rate desired for certain applications many million of voxels per second would have to be processed. A voxel is located by its base position in the data base grid and contains information for processing to form pixel data. For example, color and/or intensity and elevation is associated with each voxel.

A system which utilizes voxel data bases for generating synthetic images of a scene is described in FR-A-2553543. Accordingly, an analysis of the scene to be displayed is made by firstly defining a plurality of scanning planes, each of them including as a common line the vertical line from a view-point to the previously stored ground data and each extending radially outwardly from the common vertical line in every possible "flight directions" of the viewpoint. Subsequently, a "scan beam" takes sample points according to a constant increment of distance from the common vertical line following the linear-path at which each scanning plane intersects the stored data base.

The object of the present invention is, in contrast, to further improve the generation of realistic images or scenes at frame rates sufficient to create the appearance of continuous motion.

This object is solved by a method in accordance with claim 1.

In more detail the invention provides in accordance with a first embodiment imagery data of a scene in the form of data for pixels of a display screen, by the use of a voxel data base. A host simulation system provides data as to the viewer's eye position relative to the display screen, which determines the simulated field of view (FOV) and the voxel data base is organized into a two-dimensional grid for each of a plurality of resolution levels representing ground coordinate positions. The display screen comprises rows and columns of pixels and a plane projected through the eyepoint and a given pixel column intercepts the data base grid in a line which defines a given linear linear scanning path. In accordance with the invention the voxel data base is effectively scanned along the linear path at a data base resolution proportional to the projected pixel size on the data base and the scanned voxel data is processed into data for successive pixels, the respective boundaries of which are projected onto the data base surface encountered in the linear scan of the data base. Compensation for effects such as elevation (vertical) perspective and roll are performed following the computation of the pixel data.

One of the advantages of the invention is that separation of the horizontal and vertical perspective calculation allows for scanning the data base in a linear fashion independent of the data base contents or, more specifically, of data base values of elevation (Z), thus a highly "pipeline" computer architecture is possible. This "pipe" completely expresses the process in many successive processing stages so that at each clock cycle, substantially all aspects of the processing algorithms are processed in parallel for successive data elements.

A further parallelism in processing is achieved by the feature that by processing the linear data base scans in the proper order there is only a uni-directional interdependence which results in a straightforward precedence relationship in the derived pixel data between successive scans. This allows many of the scans to be processed in parallel, providing for a second dimension of parallelism to be implemented. The combination of these features thus allows a practical implementation of a "real time" scene generator working with a data base with sufficient descriptive capability to produce photographic like scenes.

A further advantage of the present invention is that a method and an apparatus are provided for efficiently processing voxel or gridded data bases so as to generate realistic images or scenes at frame rates sufficient to create the appearance of continuous motion.

Yet another advantage is that a method and an apparatus are provided for generating realistic images or scenes wherein parallel data processing is effectively utilized.

The novel features that are considered characteristic of this invention are set forth with particularity in the appended claims. The invention itself, both as to the organization and method of operation as well as additional objects and advantages thereof, will best be understood from the following description when read in connection with the accompanying drawings in which like reference numerals refer to like parts in in which :

Fig. 1 is a block diagram of a system which incorporates a processor in accordance with the subject invention ;

FIGS. 2a and 2b illustrate how a display pixel projected to ground level at a shallow pitch angle subtends several ground data base voxels ;

FIGS. 3a and 3b show in a functionally modular fashion, the "pipe" structure (computer architecture) for practicing the subject invention ;

FIG. 4 shows the world and screen coordinate systems and the (eye) viewing position ;

FIG. 5 is a diagram useful for explaining horizontal interpolation of the voxel data base ;

FIG. 6 illustrates column parameters generation geometry ;

FIG. 7 illustrates a pre-rotated image frame due to roll angle ;

FIG. 8 depicts the column beginning and ending pixels ;

FIG. 9 illustrates pixel end test and a pixel viability test situations ;

FIG. 10 illustrates radial color integration ;

FIG. 11 is useful in explaining vertical perspective correction ; and

FIG. 12 illustrates rotation anti-aliasing.

## DESCRIPTION OF THE PREFERRED EMBODIMENT

### Introduction

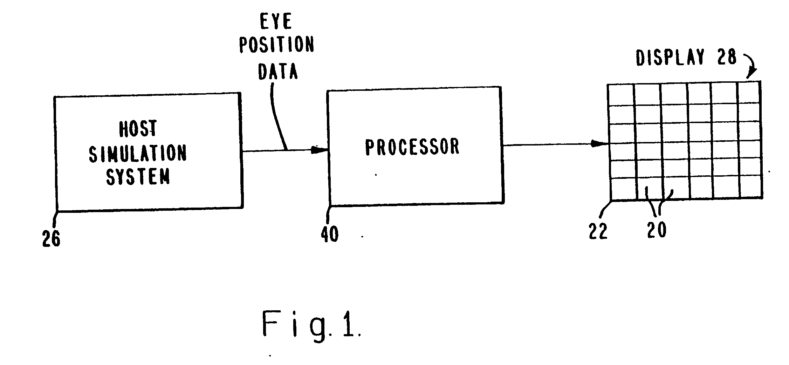

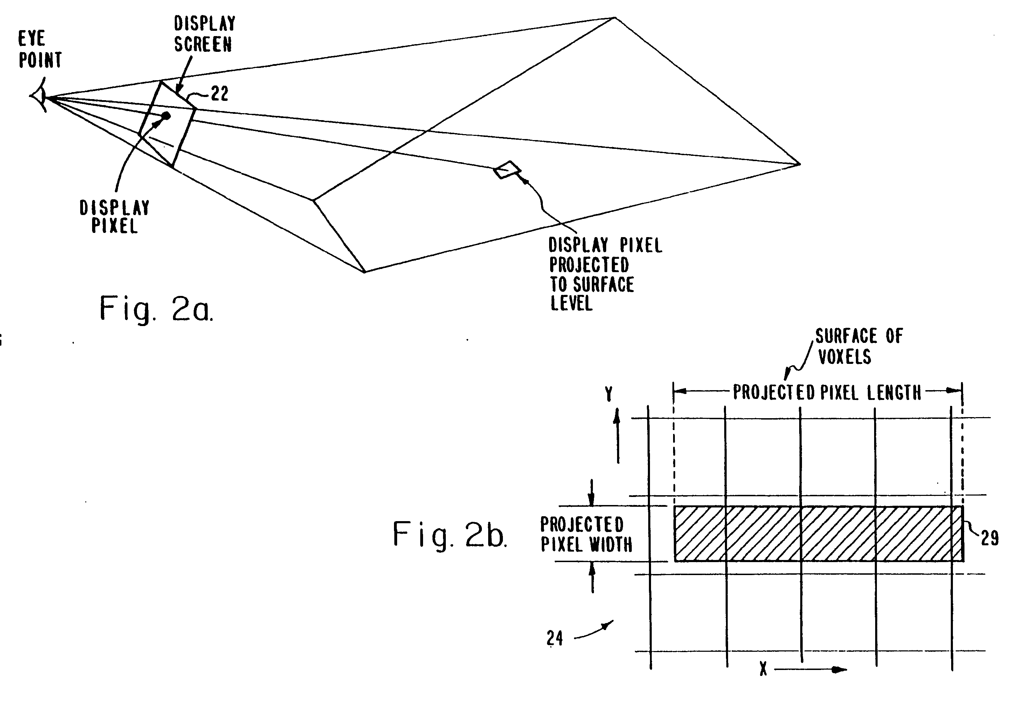

Referring first primarily to FIGS. 1-2, in accordance with one embodiment, the invention provides imagery data of a scene in the form of data for pixels 20 of a display screen 22 by the use of a voxel data base organized in a two-dimensional grid 24 representing ground coordinate positions. Although only six rows and columns of pixels 20 are shown in FIG. 1 for the purpose of simplifing the drawing, it will be understood that a much larger number such as 480 × 480 would be more typical for many applications. A pixel is a small area of the display screen which has a predetermined location thereon. A voxel is as already outlined located by its base position in the data base grid and contains information for processing to form pixel data. When a voxel's area in the x, y plane of the data base grid (see 24 of FIG. 2b) is considered with the Z value (height) associated with each grid area, a "volume element", hence voxel, is preceived. Also it will be appreciated that only a very small portion of th two-dimensional grid is shown in FIG. 2b.

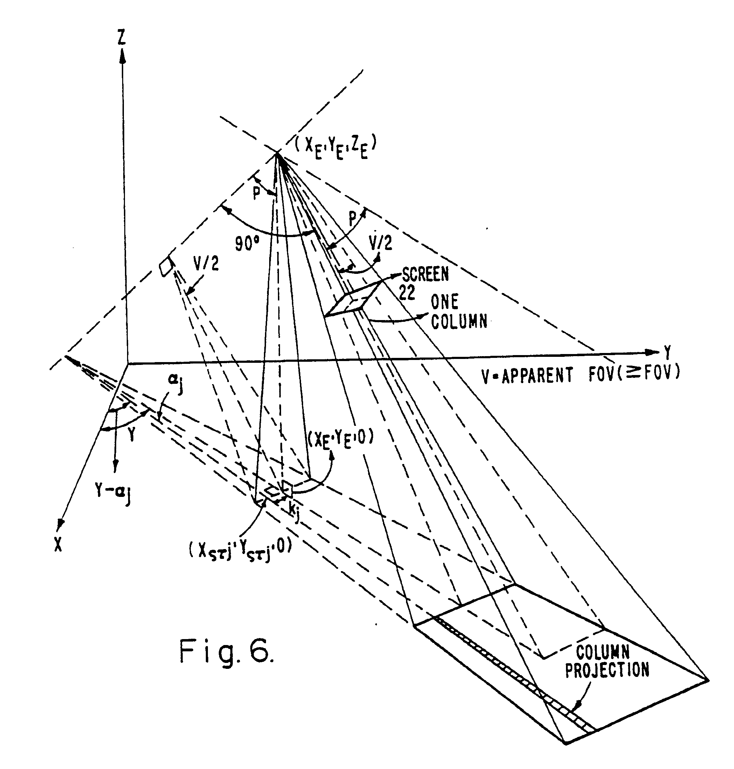

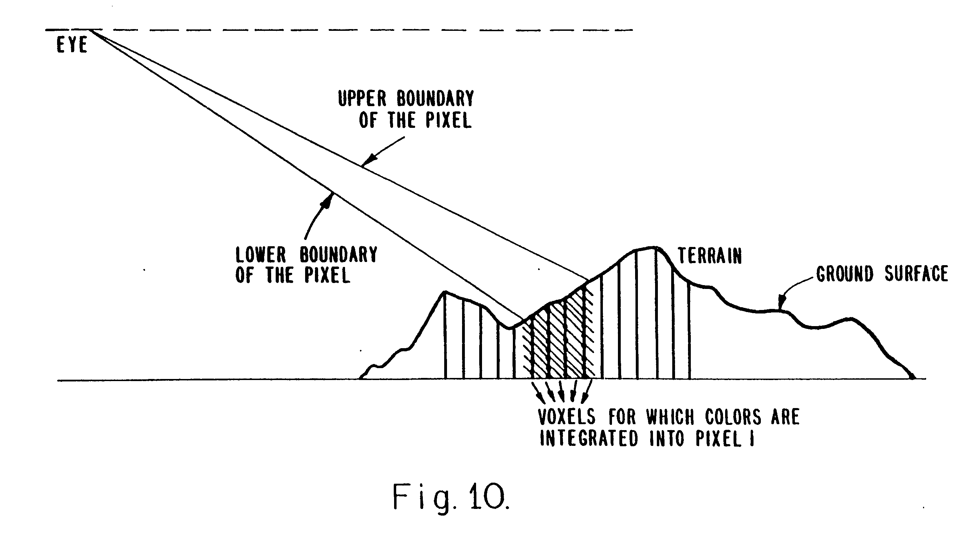

A host simulation system 26 provides data as to the viewer's eye point relatiave to the display screen 22, to processor (scene generator) 40 which in accordance with the subject invention processes the voxel data base to provide pixel data in the proper formats for display of high quality imagery on display screen 22. Host simulator system 26 may include a host computer (not shown) and a joystick driven zero model (not shown) in a trainer simulation application, for example. A plane projected through the eyepoint and a given pixel column intersects the data base grid in a line which defines a linear scanning path (see FIG.6). As will be explained subsequently, the voxel data base is effectively scanned along the linear path at a data base resolution proportional to the projected pixel size on the data base grid and the scanned voxel data is processed into data for successive pixels. As illustrated in Fig. 10, the respective pixel bottom and top boundaries are projected onto the data base surface encountered in the linear scan of the data base to define which voxels are associated with each pixel.

### Interaction of Algorithm with Architecture

The algorithm for perspective transformation of a voxel data base into screen coordinates was devised to allow successive processing of data base elements toward display pixels without frequent interdependence which would interrupt a long processing pipeline of processor 40. Large tasks are then created, composed entirely of sequential subprocesses.

Each subprocess in the pipeline process is further broken down into a pipelined subprocess.

Therefore, in the hardware realization, no processing element in the pipeline requires more than one clock cycle to complete its function and can thus pass along a processed data element each cycle. Virtually all of the processing elements are busy with valid data each cycle since the flow of data to be processed is largely uninterrupted, producing a very high efficiency of hardware use.

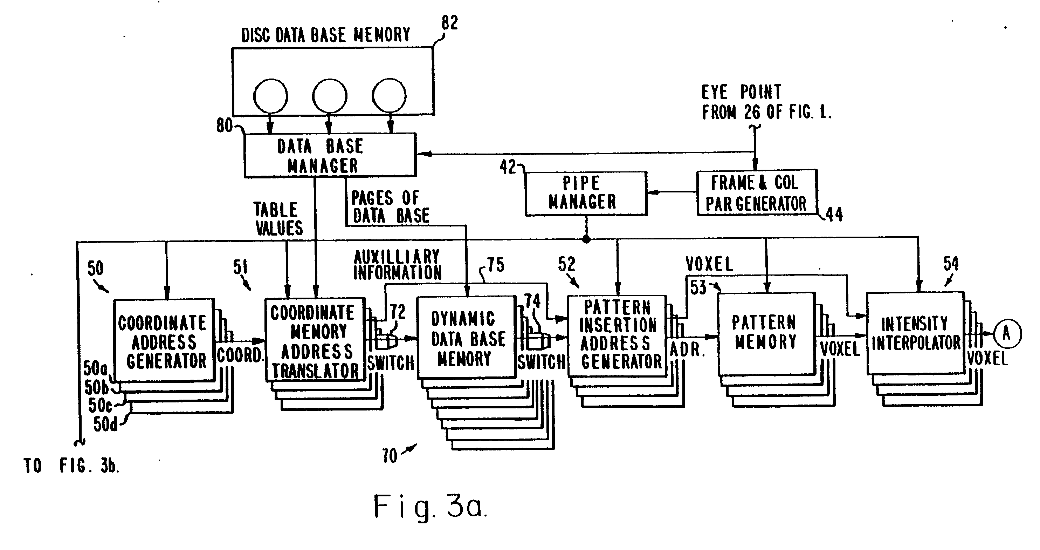

The large dynamic data base memory 70 (FIG. 3a) is implemented by dynamic MOS memories which have cycle times greater than desired processing clock times. However, the orderly way in which the algorithm scans across the data base in x, y coordinates makes for a highly efficient interleaving memory design structure. Thus, the choice of a voxel data base organized into a two dimensional grid representing ground coordinate positions optimizes this interleaving capability.

## Sizing Considerations in Hardware Architecture

FIGS. 2a and 2b illustrate how a display pixel projected to ground data base voxels. In the example of FIG. 2b, the pixel color is the integration of 3 whole voxels plus a large portion of the lst voxel and a small portion of the last (5th) voxel comprising the pixel footprint 29 on the surface of the ground data base.

The dominant sizing parameter in the described system is the pitch angle value at which in more shallow (closer to horizontal) angles load management techniques have to be employed, thus degrading the generated scene quality in some way. (The most effective load management method is to use more course voxels, thus reducing the voxel count per pixel. This is usually not noticeable in factors up to two or even four. Another option is to slow the scene generation rate in increments of 1/60 th of a second, again not very noticeable at low slant angles straight ahead.) If for instance, it is desired to go up to a pitch angle of 11° below the horizon before load management is required ; then, since voxels are 1.5 times a pixel width on the average (kept between×1 and ×2, i.e., the voxel size/resolution is chosen greater than one pixel width and less than two pixel widths), the projected pixel will average four voxels in length. Again, for example, in a 480 × 480 pixel display, 33 ms update rate picture, an average of approximately 8 million pixels per second are processed. Therefore, we will need four parallel voxel pipes, each running at an effective average rate of 8 million voxels per second to produce the required pixels.

## Overview Description

The process of real time scene generation from a voxel data base consists of accessing all of the data base descriptor elements (voxels) within view and integrating each visible voxel luminance value into the appropriate screen pixel in proportion to its contribution to that pixel. Depending on the slant angle of view and scene content, this means accessing and processing several tens of millions of voxels per second to create the display. The pixel footprint width is utilized to determine the proper hierarchy level of voxel data to process thereby keeping the number of voxels processed independent of slant range.

The image generation algorithm partitions the scene generation process into many but identical tasks allowing execution on parallel identical processors. The algorithm also allows for all of the stages in the individual task to be calculated simultaneously on succeeding data elements in a long pipeline structure. Thus, the system architecture utilizes parallelism in two dimensions making practical the high rate of computation required for voxel based scene generation.

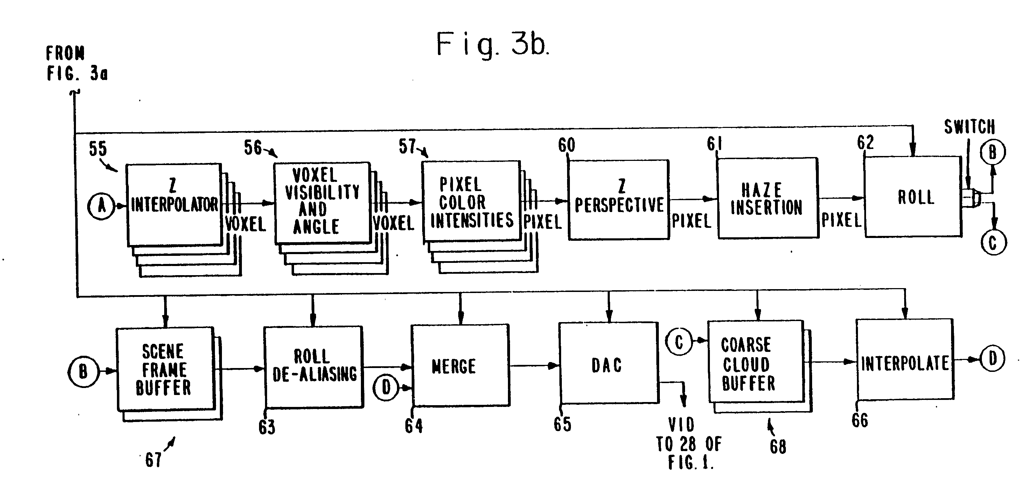

FIGS. 3a and 3b shows the front of the pipe structure as a multiple pipe configuration narrowing to a single pipe for the latter half of the processing. In particular, functional modular elements 50 through 57 are shown in FIGS. 3a and 3b as illustrating four pipes (parallel processing channels). For example, coordinate address generator 50 is shown as comprising the four modular elements 50a, 50b, 50c and 50d, each of which operate in respective processor pipes. Dynamic data base memory 70 is shown as comprising numerous submodules and buffers 67 and 68 as each comprising two submodules (although in single pipe configuration). In the multiple region, data base elements (voxels) are being processed to produce display pixels. Thereafter the data traffic reduces to much smaller and predictable number at the point that pixels are produced and a single pipe structure is sufficient to meet the remaining processing requirements.

The pipe length is built in a functionally modular fashion with a common interface protocol for the data path between physical elements, and a common control system. This provides one architecture for a range of functional additions or changes. This modularity is also of great assistance in fault diagnosis and maintenance procedures because the functions are physically isolated from each other with centrally accessible test inputs and outputs on a module basis that allows rapid fault detection/fault isolation.

The parallel pipe structure also brings modularity to hardware requirements allowing a common architecture to be economically tailored to a given application. The parallel identical pipes also provide a failsoft fault tolerant capability that provides degraded operation thus ensuring higher system availability.

The processor execution is entirely under the control of the pipe manager 42 along with its frame and column parameter generator 44. The pipe manager has a list of tasks (the can columns) and a collection of resources (the pipe processors). The manager's job Is to keep the resources busy on the tasks (which are variable in duration) to complete a frame of display information).

An interconnection (switching) networks 72, 74 before and after the active data base memory 70 allows all pipes to share access to the common data base memory. The memory is made up of many interleaved submodules in order to obtain the memory access bandwidth required.

Data definitive of the immediate view area, i.e., the area for immediate processing, is kept up to date in the active data base random access memory 70 by high speed data transfer from the data base memory 82 (library) which holds data definitive of the gaming area of interest (i.e., the area for which image/scene generation might be required). Memory 82 may comprise a plurality of magnetic disk memory units, for example. This transfer is performed under the control of the data base manager 42 which uses current and extrapolated eye point calculations for data base access control.

The Address Generator 50 utilize the Column Parameter Generator 44 output of initial condition for a pixel column path projected on the active data base, to emit a stream of ground coordinates. These are translated to real memory page and sub-page addresses to obtain voxel data at the appropriate hierarchy level. If the hierarchy level stored is at a lower resolution than required by the visibility processor 56, (as defined by the pixel footprint 29 computed from slant range) the intensity and/or color interpolator 54 and z interpolator 55 generate an appropriate voxel by utilizing the distance to the low resolution voxel corners and computing a new intermediate intensity (and or color) and z value which is inserted in the voxel stream. If a voxel is marked with an object reference, the Pattern Processor 53 accesses the referenced vertical pattern and inserts these voxels within the stream. The final result is a stream of appropriately sized voxels for a display image column. The Visibility Processor 56 processes this stream to determine voxel visibility and perform vertical intensity averaging of multiple voxels within the pixel footprint. The horizontal averaging is an effect of utilizing the appropriate hierarchy since each hierarchy was produced by averaging the next higher resolution hierarchy voxel intensities. The individual pixel information is then passed into a single pipeline where vertical perspective offset correction is added at 60 for correct total perspective, haze is inserted at 61 and at 62 the image is rotated to account for eye point roll angle. Vertical perspective displacement and rotation calculations are performed with extended precision and stored with subpixel offset values in a "ping-pong" buffer 67. As the pixels are scanned out, a four pixel to one anti-aliasing is performed at 68 proportional to the offsets calculated previously. The image is then mixed at 64 with any overlay special effects (such as clouds), symbology/graphics and converted to analog form in digital to analog/converter (DAC) 65 for application to display 30 (FIG. 1).

The system maintains proper horizontal perspective in the initial part of the pipelined process. When determining the path to follow through the data base, a plane is projected through the eyepoint and the pixel column (see FIG. 6). The path is the line where this plane intersects the base plane (data base grid 24). The paths from the projection of all the columns diverge as they extend through the data base. Thus, voxels farther from the eyepoint will appear smaller and closer together when projected onto the screen. This is a true geometric projection which maintains true horizontal perspective. This process also produces a correct vertical perspective if the pitch angle of the viewing screen equals zero. For other pitch angles proper vertical perspective is maintained by a characteristic of the algorithm which maps voxels onto screen pixels by a post displacement correction. In the data base all the voxels (Z data value) are oriented vertically with respect to the base plane. Without vertical perspective, voxels which comprise the edges of tall objects, such as buildings and chimneys, would be projected onto a single pixel column on the screen. Thus, if the view was nearly straight down between two buildings, they would appear the same distance apart at the top and bottom on the screen. With proper vertical perspective in the displayed image the building tops should be farther apart than the bottoms. To achieve the effect, the pixels which comprise the image of the buildings are actually moved apart (functional Module 60) on the screen. Their movement is a function of the pitch angle, the height of the voxels above the base plane which contribute to the pixels and the pixel column distance from the screen center.

Several processes are used to calculate how far a particular pixel should be deflected on the screen. Since a tall voxel (large Z values) may project onto several pixels, the height of the portion of the voxel which contributes to an individual pixel must be calculated. Then the deflection in world distance is calculated based on that height, the pitch and the distance from the center of the screen. Pixels to the left of the center of the screen are deflected left while pixels to the right are deflected right. Finally, the deflection in world coordinates is mapped to a deflection in screen coordinates and the pixel is assigned to the new column. The columns are computed from the center of the screen outward when the pitch angle is downward to ensure proper occulting in the image and reversed for upward pitch.

As the algorithm proceeds up (Z dimension) a tall voxel, it is deflecting each pixel into the appropriate column. The near to far scan of the algorithm allows for far scenery uncovered by deflected near objects to fill in the uncovered areas. If a closer object were deflected into a column, it would take precedence over the distant voxels and would occlude them. To ensure that closer objects occlude distant ones when pixels are being deflected, the columns are calculated from the center (in downward pitch) out to the sides. As each pixel is calculated, there may or may not be a deflection. When the pixel is ready to be put into its destination column, the algorithm checks a stored fill value to determine whether or not the pixel has already been filled. Since the algorithm is working out from the center, any pixel that has already been filled must have been filled by a pixel deflected from an inner column. That inner pixel must have been from a closer voxel because it was deflected farther than the current pixel. Therefore, it should occlude the pixel calculated from the current voxel which is then regarded as hidden and simply discarded.

The fill value is also used to anti-alias edges in profile. When it is detected that a pixel is partially filled by an edge, it is stored in the frame buffer 67 with this partial fill value. Later in the scan, background voxels generate a pixel candidate for this position ;which fills the balance of the fill value and adjusts the intensity accordingly.

## Specific Description

The system of the invention uses a data base representation which at once can describe the "photographic" scene detail needed and can help in the scene generation process. This is basically a grid of elements each with an expression of elevation and color and/or intensity (brightness only value for monochrome systems) and altitude information. In the data base creation process, four adjacent elements (2x and 2y) color and/or intensity values are integrated and their maximum elevation value assigned to create a higher level (more coarse) hierarchy of the data base. This integration is repeatedly performed to produce a number of levels in the data base hierarchy. This off line process, which expands the data base only fractionally, is the first step toward total ground integration in a pixels subtended area. By selecting a hierarchy in the data base which contains voxels approximately equal to the width of a projected display pixel from the given eye point to the ground point of interest, horizontal integration is accomplished. The algorithm next provides for an orderly scan of the area of interest in the data base. The straight line scans of successive data base elements serves to optimize the efficiency of a highly interleaved memory. The scan is performed in a direction away from the eye position along radials spaced equal to the width of a column of display screen pixels, projected to the data level (see FIG. 6). The scans are performed at a data base hierarchy level which provides a slightly larger voxel than pixel ; thus ensuring that all of the grid is observed. As the scan proceeds outward radially, successive voxels that are subtended by a pixel are integrated and normalized to complete the total grid integration.

Visible voxels increase in vertical angular viewpoint as the voxel scan progresses radially outward. Thus, on fixed (per display format) pitch angle boundaries, the voxel luminances contribute to successive pixel rows.

A reasonable approximation to a true perspective for many applications and especially those with a narrow field of view (FOV) is to constrain all of the straight line of voxels scanned in the base grid plane to fall into a single column of pixels in the display. A latter section deals with vertical perspective correction for correct perspective in wide field of views.

The above process is performed assuming that the horizon is level. Then the resulting scene is rotated about the boresite to account for any roll angle. The rotation is calculated at a higher degree of accuracy than pixel boundaries would dictate so that an anti-aliasing unit which follows can compute new pixel values from surrounding offset contributors.

Additional scene treatment occurs at other points in the process. Prior to processing, but after retrieving a voxel from the data base memory, the voxel (as an option) is passed through a pattern insertion stage 52 where marked voxels can call up selected vertical patterns to insert in the voxel stream. These can represent stationary above ground objects such as trees, buildings, vehicles, etc., with multiple color values in the vertical dimension, including transparent sections. An optional additional capability for moving objects is provided by a means in the coordinate position scan generator to match the current generated position against the head of a sorted list of window areas. Each window area represents the footprint of a moveable object (that is, the window coordinates can be moved). When a match occurs, then a parallel process obtains the actual rotated base of the identified object with its base elements marked to access the appropriate patterns via the same mechanism as the stationary pattern insertion stage. Thus, a common object base description can be used in many places in the data base at any orientation. Also, it shares patterns with all other objects, moving or stationary.

Following pixel formation, at 61 haze is generated as a function of distance and vertical looking angle. Clouds are inserted at 68 by scanning with the same mechanism on alternate data base in the common data base memory 70. This alternate data base describes a cloud pattern in three dimensions just as the ground is described. The cloud pattern is purposely very course in order to generate fuzzy clouds with translucent edges. This course data base occupies very little data base memory and requires a small frame buffer for assembling the cloud view, which is only 1/64 as large as the ground scene buffer since the cloud linear resolution is 1/8 the ground scene resolution. Following the cloud frame buffer an interpolation 66 smooths the cloud scene between the course pixels and merges at 64 in the ground pixels where cloud data is missing. Pixel range comparison is used to determine which is visible.

6

## Coordinate System

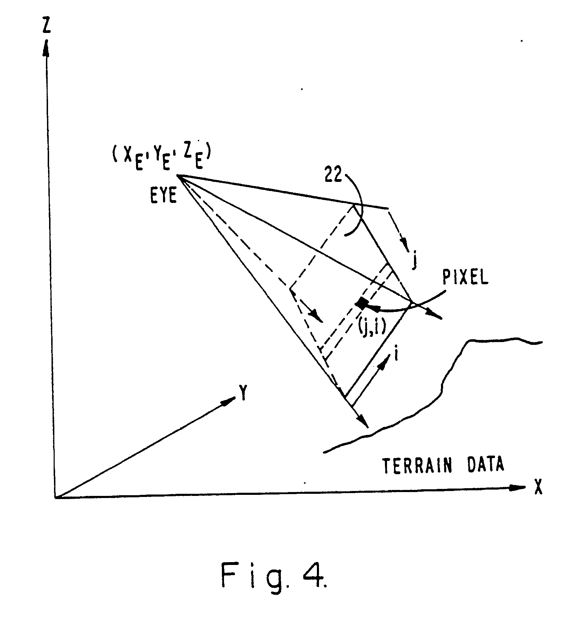

Before discussing the particulars of the scene generation algorithm, the coordinate systems will be introduced. There are world coordinates and screen coordinates. Simplicity results by assuming the image is horizontal (roll angle = 0). This obviates the need to perform the usual, cumbersome 3-D transformation. This will be explained in more detail in a later section. The world coordinates system represented by X, Y, and Z defines the voxel data base. (X, Y) maps the data location and Z is the elevation. The screen coordinate represented by j and i is the 2-D coordinate where the final images are displayed. Variable j refers to the column number of the screen and i to the pixel number. There are 2N colums per image and 2N pixels per column. Both j and i vary from $-$ N to N $-$ 1. FIG. 4 shows the two coordinate systems and the (eye) viewing position ($X_E$, $Y_E$, $Z_E$).

## Data Base

The voxel type (gridded) data base is used to describe the natural terrain and man-made structures and is created by digitizing aerial photographs into a very fine grid. This is then overlaid onto the corresponding digital terrain elevation data. There are two reasons for using a voxel type data base : (1) hardware efficiency is improved if the memory can be organized (highly interleaved) such that the scanning process can access the memory with minimal contention ; and (2) natural terrain texturing is improved if the data originates from aerial photography ; the details of the terrain textures are built-in. At each location (X, Y), the voxel data base contains the color and/or brightness information and the elevation value of that location. It has been mentioned that the color of the pixel is the area integration of the voxels subtended by the pixel. Part of the voxel integration can be performed at the data base preparation time (i.e., as an off-line process), by adding several hierarchies of voxels to the data base. Starting with the original digitized data, a higher-level hierarchy of voxels is created by averaging the color of four adjacent (two in X and Y) voxels. This process is repeated to create a number of levels in the binary hierarchy. Initially, during the voxels processing, we choose a hierarchy level whose voxel size is comparable to the projected pixel size. This accomplishes the integration in horizontal cross view direction. As the scan proceeds, when the voxel slant range doubles, the projected pixel width also doubles. At this point, switch to the next higher level (coarser resolution voxel) in the data base and continue the scanning process. This switch in hierarchy level occurs each time the range again doubles. This operation provides integration in both the cross range and radial directions and at the same time maintains a processing load that is independent of range. The load is only dependent on the pitch angle, increasing with shallower angles.

The data base need not be prepared with all required resolution levels at all places. In many areas, it is unnecessary to provide high resolution detail or it may be unavailable due to photographic limitations or memory limitations. The processor at scan time will attempt at each voxel access, the hierarchy of resolution appropriate to the slant range and projected pixel size. If this is unavailable, then the next highest hierarchy which is available will be selected. Since a lower hierarchy of resolution is never selected, total horizontal intensity integration is always accomplished. Voxels will never fall between scan columns and be missed.

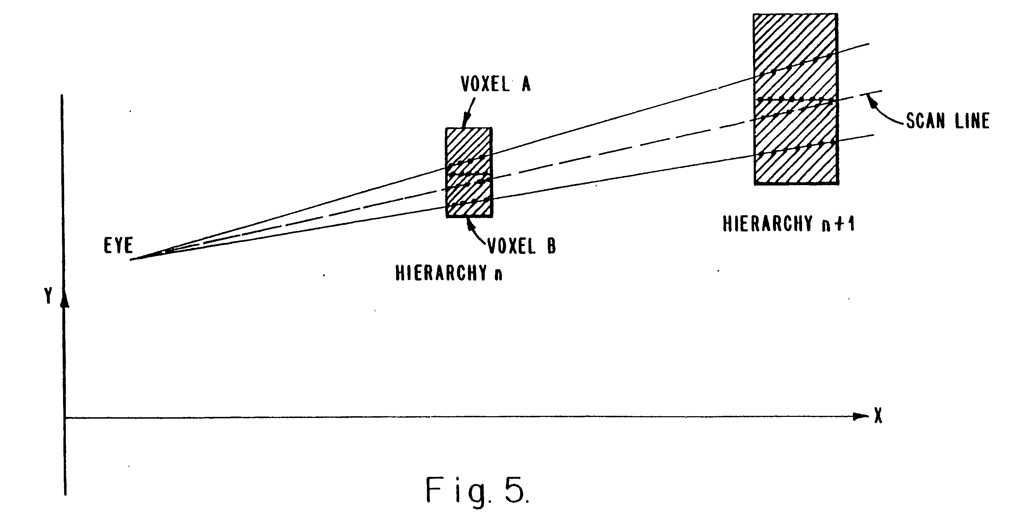

In order to accommodate larger than ideal voxels and avoid a tiling effect, a process of horizontal interpolation is performed by linearly interpolating between the four corner intensity values of the voxel according to the scan position within the voxel (FIG. 5). Also, to obtain smooth terrain profiles this same function is performed on the Z elevation values of the four corners of the voxel. In order to avoid multiple data base accesses at run time, these four intensity and Z values are stored with each voxel. Except in places of discontinuities these corner values are merely copies of the adjacent voxel values and are thus redundant. The data is stored in memory 82 (FIG. 3a) in a compressed format without this redundacy. It is expanded "on the fly" as the data is transferred into the RAM data memory 70.

The data base created from direct, overhead aerial photography does not supply the color information on vertical edges resulting from discontinuities in elevation such as buildings, bridges, cliffs, etc. These vertical edges correspond to multiple color elevation values at the same terrain location. However, the corresponding voxel can contain only one elevation value, and only one color value. Therefore, whenever there is a vertical edge in the data base, a separate data base or pattern must be supplied to accommodate it. This data may also be created from digitized photography or may be synthetically composed. Without significant loss of realism, the same pattern data, i.e., the windowed wall of a building, can be used for more than one vertical edge. In the ground data base if a patterned object is required, then the voxels in the footprint of the object are each replaced with a pointer to a vertical pattern in pattern memory.

## Calculations Performed by The Image Processor

### Frame Parameters

In real time image generation, every image (i.e., frame) is uniquely characterized by the eye position : $X_E$, $Y_E$, $Z_E$, the attitude : R (roll), P (pitch), Y (yaw), and the FOV (field of view). Normally, the FOV is fixed for a sequence of images. Only $X_E$, $Y_E$, $Z_E$, R, P, Y vary from frame to frame. It is there six parameters that are received every 1/30 second from an external source, i.e., a joystick driven aero model (not shown) which is part of host simulation system 26 (FIG. 1).

### Column Parameter

After receiving the image parameters, the algorithm calculates the scan parameters for each column which are forwarded to column processing pipes as they complete each column. FIG. 6 shows how there parameters are defined. If we project all columns, which are parallel to each other at the screen from the screen to the ground plane (Z = 0), the projections are no longer parallel except when the pitch angle is equal to 90 degrees. These projections extend radially outward to infinity and inward to intersect along the line which passes through the nadir ($X_E$, $Y_E$, O) and is parallel to the horizon line. The intersection poins (one for each projection) are the starting points for ground scan. FIG. 6 shows the starting point ($X_{stj}$) for column j. A special case exists when the pitch angle is zero, in which all scans start at the nardir point ($X_E$, $Y_E$, O).

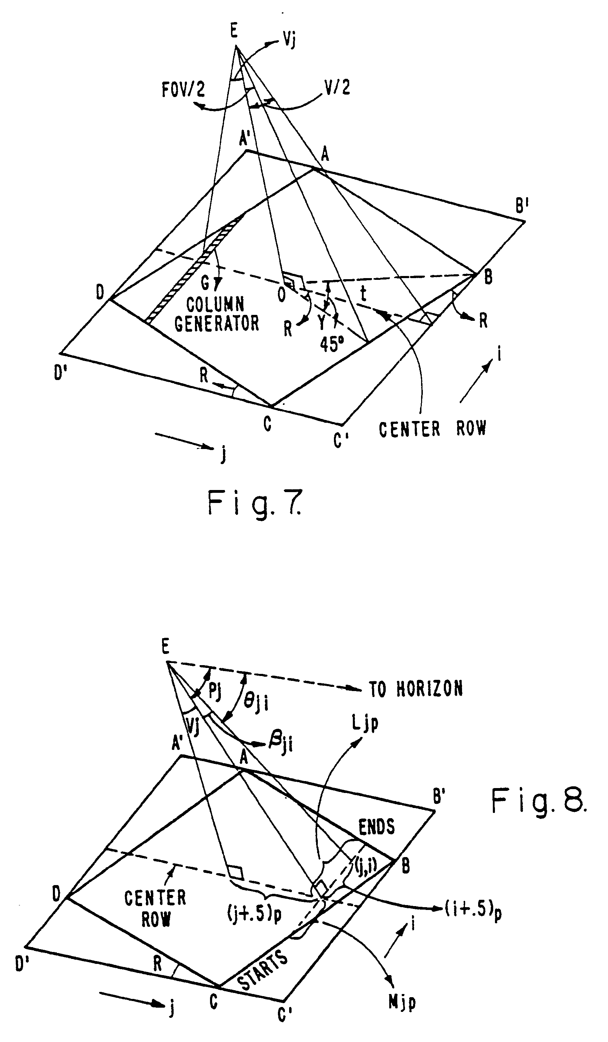

Before the starting points for the column scans can be calculated, there are some other parameters that must be defined and calculated. The images that are first generated are for zero roll angle. The rotation to produce the true final image is performed after this original image is assembled. This means that a prerotated image must be generated. That is, in the prerotated image the grid lines are rotated with respect to the edge of the image such that the final rotation will put the output image into a rectangular format with grid parallel to the edge of the image. In FIG. 7, the slanted square ABCD is the actual image to be generated, but the columns generated will be parallel to the edges A'D' and B'/C'. It can be seen that the number of columns and their length in frame ABCD varies depending on the roll angle (R). If the final image resolution is 512 × 512, the largest number of pixels in a column will be 724 when R equals 45 degrees ; the smallest will be 1 at the ends. When R = O, all columns will have 512 pixels.

If the output image has a given FOV angle, from FIG. 7 it can be seen that the FOV' for frame A' B' C' D' is greater than or equal to FOV. This will be referred to as apparent field of view.

For pixel column j, there is a corresponding angle $V_j$, defined as the angle between the center row view direction EG and the frame direction EO (see FIG. 7).

Once FOV' and $V_j$ are calculated, the starting point (Xstj, Ystj) can be calculated (see FIG. 6). When this is done, the increments in X-direction, $X_j$ ; in Y-direction, $Y_j$ ; and in range, $R_j$, are then calculated. To avoidmissing voxels, the scanning will cross one minor axis grid line (at the appropriate grid resolution) each step, i.e., if the major axis of the scanning line is X (the angle between the scanning line and X-axis is less than 45 degrees), $X_j$ will be set to 1. Otherwise, $Y_j$ is set to 1. To find the orientation of the scanning line, another angle, $\alpha_j$, which is the angle $V_j$ projected to the ground along the direction perpendicular to the frame view direction (see FIG. 8), needs to be calculated. The minor axis increment is then equal to the tangent of the angle between this scanning line on the ground plane' and the major axis. $X_j$ and $Y_j$ are both scaled later by the coordinate scan generator to the proper hierarchy level.

In column scanning, it is desired to integrate all the colors (or brightness) values of voxels, that a pixel subtends, into the pixel. Therefore, the pixel boundaries within the column vertically and calculated so that start and stop points for the integration are defined. The boundaries of pixel $(j, i)$ are $\theta_{j, i}$ and $\theta_{j, i+1}$. $\theta_{j, i}$ is the angle between the view direction of pixel $(j, i)$ and the horizon plane through eye positions (see FIG. 8).

The end of a column scanning is determined when the number of increments counted in $B_{j, i}$ calculated exceeds $L_j + M_j$, where $L_j$ is the number of pixels above the center row and $M_j$ is the number below.

### The Column Processing Pipe

#### Voxel Address Generation 50

The basic function of this part of the algorithm is to use $X_{stj}$, $Y_{stj}$, and $X_j$, $X_j$ to generate the voxel addresses along the scan line. It should be noted that the addresses generated are at resolution of the appropriate hierarchy level of voxels. In the physical memory (82 of FIG. 3a), voxels are stored in "pages" of 128 × 128 voxels (16K words). Each page represents an area of world coordinate space of size proportional to the resolution hierachy of the voxels in the page. A page of voxels at a resolution of one foot will represent 128 by 128 feet of real world space. These pages are referenced by a memory mangagement unit 80 by their hierarchy number and base coordinate position and dynamically loaded in the data base RAM 70 (FIG. 3a) as the footprint of the viewing area moves across the ground. Following the generation of real world coordinates by the column scanning unit, a translation unit 51 checks a set of valid page tables to see if real memory 82 contains the page representing the desired hierarchy and coordinate position. If not, it finds the next best available. The actual page physical base address is obtained and supplemented with the within page individual voxel address. This resulting address is sent to the multiple common data base memory modules 70 via a multiplexing/demultiplexing swith 72. The memory modules access the addressed voxel and forward it through switch 74 to the resolution requesting pipe for processing.

## Pattern Memory and Processing

The data for each voxel contains a pattern flag bit. If this flag is not sent, the voxel is an ordinary ground voxel, which contains a Z values of the four corners relative to a page related base Z, and the color of the four corners of the voxel. Except for discontinuities, these Zs and colors are just copies of the neighboring corners. If the pattern flag is set, then this voxel will have multiple Z values and colors, i.e., a vertical pattern is needed. The voxel data now will contain an index that points to the proper pattern to access. These patterns are retrieved from a shared pattern memory 53 and inserted in the voxel stream as successive voxels of varing heights one above another at the same X, Y location.

Functional module 54 interpolates the intensity and/or color and Z values between the four corners of the voxel using an extended resolution pair of X, Y offset values (into the voxel), provided in a path 75 from the address generator which bypasses the data base memory.

## Voxel Processing

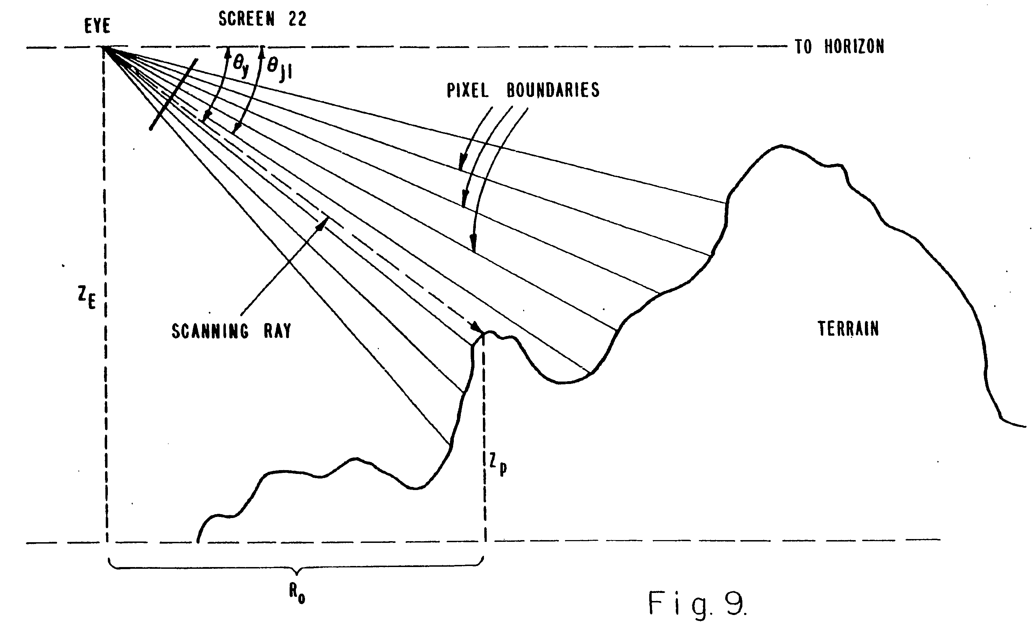

At the next unit the pipe line module 56, two immediate tests are made : (1) pixel end test and (2) pixel visibility test, to help in making the decision for color integration. The pixel end test is to determine whether the voxel is outside the current pixel boundary. FIG. 9 illustrates examples of both situations. This unit utilizes the ground distance, $R_g$, as computed by the number of steps taken in the data base and each step size (resolution size) and the voxel z value to compute a voxel surface angle $\theta_y$. In the pixel test, $\theta_y$, is compared against the pixel boundary angle $\theta_{ji}$ which are fixed but relative to the boresite pitch. The visibility test compares the current $\theta_y$ against the previously determined visible voxel angle.

After these two tests, if a voxel is within the pixel boundary and visible, the color of the voxel can be integrated into the pixel.

The radial color integration is illustrated by FIG. 10. The color of the shaded voxels should all be integrated into the pixel i. A straightforward implementation is to simply sum all the colors of the shaded voxels and then normalized. This is generally adequate when the scene is textured terrain, but when the scene is, say, a dark building against a bright background, the edge of the building will appear jagged, and will have a cartoonish motion. To correct this, the angular portion of the pixel that the voxel subtends is calculated, then the color is weighted by this proportion. Conversely, voxels which overlap pixel boundaries are distributed to those pixels proportional to the amount of each pixel covered.

## Vertical Perspective

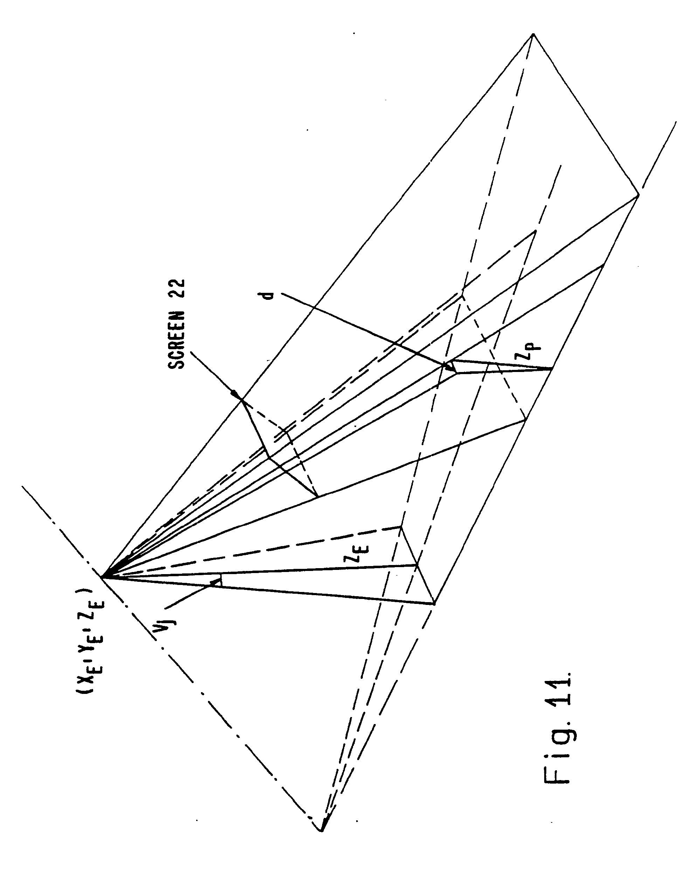

After the pixels are formed, as an option for wide fields of view and flat screen projection, a vertical perspective correction stage 60 is provided. The vertical perspective correction is the displacement, d, (FIG. 11) between P and P' which correspond to the displacement on the image screen to another column. This displacement is a function of pitch angle, voxel height above zero reference, and the distance from the screen center. From FIG. 11 it can be calculated as :

$$d = Z_p \, SinP \, tan \, V_j \quad (1)$$

where $Z_p$ is the voxel height above the base. P is the pitch angle of the screen normal and $V_j$ is the column yaw angle from the center column. The larger the pitch angle, the taller the voxel is or the further away from the center column, the larger the displacement wil be. There should be no deflection at the center column of the image nor for the zero pitch angle view. Equation (1) calculates the displacement in world space units. To find the corresponding deflection in screen units, the displacement d is protected back onto the screen. The following equation gives the column number after deflection :

$$j_{new} = j_{middle} + (j_{old} - j_{middle}) \frac{d + Rs \sin Vj}{Rs \sin Vj}$$

where Rs is the slant range from the view position to the point on the voxel to be displaced and $j_{new}$, $j_{old}$, and $j_{middle}$ are the new, old, and middle column number correspondingly.

Also, since $Z_p$ (the intermediate pixel points on a tall voxel) is not directly available : $Zp = Z_E - Rs \sin \theta$
Combining these equations, and where $j_{middle} = O$

$$j_{new} = (j_{old} \sin P / \cos Vj)(Z_E/Rs - \sin \theta) + j_{old}$$

where $Z_E$ = altitude of eye point
Zp = altitude of point in question
Rs = slant range to point in question
$\theta$ = pitch angle to point in question

This form is used to derive the displaced column value because the first term is a constant for the entire column and can be supplied by the column parameter generation 44 (FIG. 3a), Rs is derived for each point for other purposes, $\theta$ is the vertical pixel angle from a table and $Z_E$ is a frame parameter constant for the entire frame.

Haze Insertion 61

Haze effect is dependent on the slant range of the pixel contents and pitch angle of the pixel relative to the horizon. It is calculated at the same pipeline states where rotation is performed. The haze function is described by :

$I_{out}$ = $I_{orig.}$ $(1 - H) + I_H(H)$ = output intensity (color)
H = $f(Rs, Vis\theta)$ = haze opacity, and is limited between 0 and 1
$I_H$ = Intensity of haze (color)
$V_{is}$ = Range at which intensity is half original and half haze
Rs = slant range to pixel contents
$\theta$ = Pitch angle of pixel

Rotation 62

The rotation calculation is performed by the straight forward calculation :

$$X_O = X_I \cos R + Y_I \sin R$$

$$Y_O = Y_I \cos R - X_I \sin R$$

where

R = Roll angle
$X_I, Y_I$ = the initial coordinates
$X_O, Y_O$ = the final output coordinates.

Rotation, Anti-Aliasing, and Video Output

Due to image prerotation, the gridded pixels calculated are not the same as the pixels for the output image. The calculated pixels are correct for a prerotated grid. After rotation by some arbitary amount, these pixels now fall not regularly on the grid scanned out in the final display format, but rather in locations between these pixels. If arbitrarily moved back into the scan grid structure, a strong aliasing effect would be exhibited.

During the rotation, new pixel positions are calculated with two extra bits, for example, of accuracy in both x and y. These bits, representing an offset from the pixel home location, are stored with the pixel color and/or intensity value in this ping pong double output buffer 69. After a frame is built in one of these buffers, it is then used to scan for the output picture while the other buffer is used to construct the next frame. While the buffer is being scanned to create the output video, two ajacent rows are actually scanned simultaneously to obtain the information necessary to accomplish the antialising algorithm.

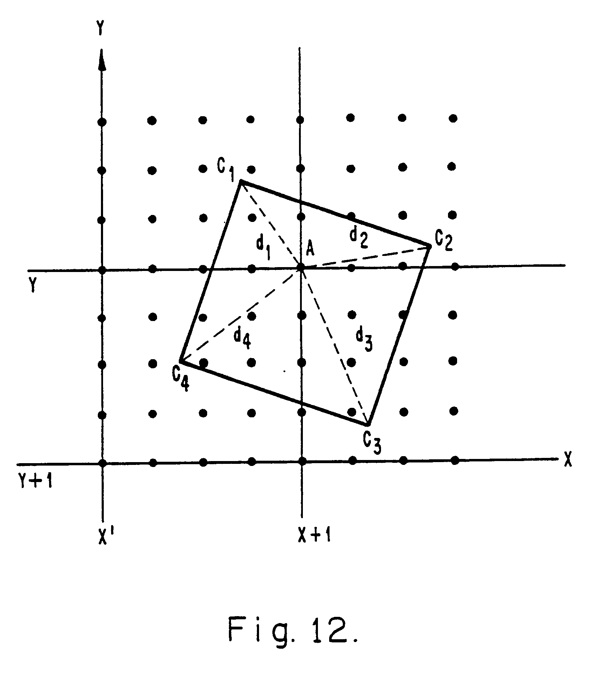

FIG. 12 shows grid point A in the rotated image for which the antialiasing rotation is to be performed, and $C_1$, $C_2$, $C_3$, and $C_4$, which are four pixels in the original image rotated by R into display coordinates, x, y. The color values of these four pixels are integrated into the next pixel at A according to the distances $d_1$, $d_2$, $d_3$, and $d_4$, inversely weighted by their offsets from A (note that the number of contributions to one single output grid may not always be four). It is dependent upon the rotation angle. The greatest number of contributions is five, but it could be as small as two.

Hence a new and improved scenographic process and processor for fast pictorial image generation has been disclosed.

## Claims

1. A method for computer generation of image data of a scene for a display screen (22) comprising rows and columns of pixels (20), in the form of data for said pixels (20), said method comprising the steps of :
using a voxel data base, that is a data base comprising data concerning elevation and surface features, said data base being organized into a two-dimensional grid (24) representing ground coordinate positions;
projecting planes through an eyepoint and the coordinates of pixel columns intersecting said data base grid in lines ;
scanning said voxel data base along such lines to create the data for the various pixel columns ; characterized by further comprising the steps of :
providing said voxel data base at a plurality of resolution levels ; repeatedly selecting a resolution level from among said plurality of resolution levels of said voxel data base as said scanning along said line proceeds such that the voxel width associated with said resolution level is slightly larger than the projected width of a screen pixel (20) ;
utilizing said scanned voxel data to derive data representative of successive pixels (20) such that the voxel data used to form a particular pixel (20) is representative of a scene feature which is visible from said eyepoint.

2. The method of Claim 1 further comprising moving the relative positions for display of said pixel data derived from said voxel data on the display screen (22) apart so as to simulate the vertical perspective of the scene.

3. The method of Claim 1 further comprising rotation of the relative positions for display of said pixel data on the display screen (22) as a function of the roll orientation of the display screen (22).

4. The method of Claim 1 further comprising simultaneously processing scanned voxel data for a plurality of respective parallel processing channels and combining the pixel data from the plurality of channels onto a predetermined format for the display screen (22).

5. The method of Claim 4 wherein combining the pixel data onto a predetermined format comprises moving the relative positions for display of said pixel data on the display screen (22) apart so as to simulate the vertical perspective of the scene.

6. The method of Claim 4 wherein combining the pixel data into a predetermined format includes rotation of the relative positions for display of said pixel data on the display screen (22) so as to compensate for the roll orientation of the display screen (22).

7. The method of Claim 4 wherein combining pixel data into a predetermined format comprises moving the relative positions for display of said pixel data on the display screen (22) apart so as to simulate the vertical perspective of the scene and rotation of the relative positions for display of said pixel data on the display so as to compensate for the roll orientation of the display screen (22).

## Patentansprüche

1. Verfahren zur Computererzeugung von Bilddaten einer Szenerie für einen Anzeigenschirm (22), welcher Zeilen und Spalten von Pixeln (20) aufweist, in der Form von Daten für die Pixel (20), wobei das Verfahren die Schritte aufweist :
Verwenden einer Voxeldatenbasis, welches eine Datenbasis ist, die Daten bezüglich Höhen- und Oberflächenmerkmalen aufweist, wobei die Datenbasis in einem zweidimensionalen Netz (24) organisiert ist, das Bodenkoordinatenpositionen darstellt ;

11

Projizieren von Ebenen durch einen Augenpunkt und den Koordinaten der Pixelspalten, wobei das Datenbasisnetz in Linien geschnitten wird ;

Abtasten der Voxeldatenbasis entlang derartiger Linien, um die Daten für die verschiedenen Pixelspalten zu erzeugen ; dadurch gekennzeichnet, daß es des weiteren die Schritte aufweist :

Bereitstellen der Voxeldatenbasis bei einer Vielzahl von Auflösungsebenen ;

wiederholtes Auswählen einer Auflösungsebene aus der Vielzahl der Auflösungsebenen der Voxeldatenbasis wenn das Abtasten entlang der Linie fortschreitet, so daß die Voxelbreite, die mit der Auflösungsebene verbunden ist, leicht größer ist als die projizierte Breite eines Schirmpixels (20) ;

Verwenden der abgetasteten Voxeldaten um Daten abzuleiten, welche aufeinanderfolgende Pixel (20) darstellen, so daß die Voxeldaten, die verwendet werden, um ein bestimmtes Pixel zu bilden, ein Szeneriemerkmal darstellen, welches von dem Augenpunkt aus sichtbar ist.

2. Verfahren nach Anspruch 1, mit :

Auseinanderbewegen der relativen Positionen für die Anzeige der Pixeldaten, die von den Voxeldaten abgeleitet wurden, auf dem Anzeigenschirm (22), um die vertikale Perspektive der Szenerie zu simulieren.

3. Verfahren nach Anspruch 1, mit :

Rotieren der relativen Positionen für die Anzeige der Pixeldaten auf dem Anzeigenschirm (22) als eine Funktion der Rollorientierung des Anzeigenschirms (22).

4. Verfahren nach Anspruch 1, mit :

simultanes Verarbeiten der abgetasteten Voxeldaten für eine Vielzahl von jeweiligen parallelen Verarbeitungskanälen und Kombinieren der Pixeldaten aus der Vielzahl von Kanälen auf ein vorherbestimmtes Format für den Anzeigenschirm (22).

5. Verfahren nach Anspruch 4, worin das Kombinieren der Pixeldaten auf ein vorherbestimmtes Format den Schritt beinhaltet :

Auseinanderbewegen der relativen Positionen für die Anzeige der Pixeldaten auf dem Anzeigenschirm (22), um die vertikale Perspektive der Szenerie zu simulieren.

6. Verfahren nach Anspruch 4, worin das Kombinieren der Pixeldaten auf ein vorherbestimmtes Format den Schritt aufweist :

Rotieren der relativen Positionen für die Anzeige der Pixeldaten auf den Anzeigenschirm (22), um die Rollorientierung des Anzeigenschirmes (22) zu kompensieren.

7. Verfahren nach Anspruch 4, worin das Kombinieren der Pixeldaten auf ein vorherbestimmtes Format den Schritt aufweist :

Auseinanderbewegen der relativen Positionen für die Anzeige der Pixeldaten auf dem Anzeigenschirm (22), um die vertikale Perspektive der Szenerie zu simulieren und Rotieren der relativen Positionen für die Anzeige der Pixeldaten auf der Anzeige, um die Rollorientierung des Anzeigenschirmes (22) zu kompensieren.

## Revendications

1. Procédé pour produire par un calculateur des données d'image d'une vue destinées à un écran de visualisation (22) comprenant des rangées et des colonnes de pixels (20), sous forme de données pour lesdits pixels (20), ce procédé comprenant les étapes suivantes :

on utilise une base de données de voxels, c'est-à-dire une base de données comportant des données relatives à des particularités d'altitude et de surface, cette base de données étant organisée en grille bidimensionnelle (24) représentant des positions de coordonnées au sol ;

on projette des plans passant par un point d'observation et les coordonnées de colonnes de pixels et qui coupent la grille de la base de données selon des lignes,

on balaie la base de données de voxels suivant ces lignes pour créer les données pour les diverses colonnes de pixels ; caractérisé en ce qu'il comprend en outre les étapes suivantes :

on prévoit la base de données de voxels avec plusieurs niveaux de résolution ; on sélectionne de façon répétitive un niveau de résolution parmi ces niveaux de résolution de la base de données de voxels pendant le déroulement de balayage suivant la ligne de façon que la largeur de voxel associée à ce niveau de résolution soit légèrement supérieure à la largeur projetée d'un pixel (20) de l'écran ;

on utilise les données de voxels balayées pour déduire des données représentatives de pixels successifs (20) de façon que les données voxels utilisées pour former un pixel particulier (20) soient représentatives d'une particularité de la vue qui est visible depuis le point d'observation.

2. Procédé conforme à la revendication 1, dans lequel on écarte les positions relatives pour la visualisation des données de pixels déduites des données de voxels sur l'écran de visualisation (22) de façon à simuler la perspective verticale de la vue.

3. Procédé conforme à la revendication 1, dans lequel on fait tourner les positions relatives pour la visualisation des données de pixels sur l'écran de visualisation (22) en fonction de l'orientation en roulis de l'écran de visualisation (22).

4. Procédé conforme à la revendication 1, dans lequel on traite des données de voxels balayées pour plusieurs canaux de traitement parallèle respectifs en même temps qu'on combine les données de pixels issues de ces canaux selon un format prédéterminé pour l'écran de visualisation (22).

5. Procédé conforme à la revendication 4, dans lequel la combinaison des données de pixels selon un format prédéterminé comprend un écartement des positions relatives pour la visualisation des données de pixels sur l'écran de visualisation (22) de façon à simuler la perspective verticale de la vue.

6. Procédé conforme à la revendication 4, dans lequel la combinaison des données de pixels selon un format prédéterminé comprend une rotation des positions relatives pour la visualisation des données de pixels sur l'écran de visualisation (22) de façon à compenser l'orientation en roulis de l'écran de visualisation (22).

7. Procédé conforme à la revendication 4, dans lequel la combinaison des données de pixels selon un format prédéterminé comprend un écartement des positions relatives pour la visualisation des données de pixels sur l'écran de visualisation (22) de façon à simuler la perspective verticale de la vue et une rotation des positions relatives pour la visualisation des données de pixels sur l'écran de visualisation de façon à compenser l'orientation en roulis de l'écran de visualisation.

DISPLAY 28

20

22

PROCESSOR

40

EYE
POSITION
DATA

HOST
SIMULATION
SYSTEM

26

Fig.1.

EYE
POINT

DISPLAY
SCREEN

DISPLAY
PIXEL

~22

DISPLAY PIXEL
PROJECTED
TO SURFACE
LEVEL

## Fig. 2a.

EP 0 281 615 B1

SURFACE OF
VOXELS

Y

PROJECTED PIXEL LENGTH

## Fig. 2b.

PROJECTED
PIXEL WIDTH

29

24

X

Fig. 3a.

# Fig. 3b.

SWITCH

| 55 | 56 | 57 | 60 | 61 | 62 |
|---|---|---|---|---|---|

Ⓐ → Z INTERPOLATOR →VOXEL→ VOXEL VISIBILITY AND ANGLE →VOXEL→ PIXEL COLOR INTENSITIES →PIXEL→ Z PERSPECTIVE →PIXEL→ HAZE INSERTION →PIXEL→ ROLL → Ⓑ / Ⓒ

Ⓑ → SCENE FRAME BUFFER → ROLL DE-ALIASING Ⓓ → MERGE → DAC → Ⓒ COARSE CLOUD BUFFER → INTERPOLATE → Ⓓ

| 63 | 64 | 65 | | 66 |
|---|---|---|---|---|

67

VID
TO 28 OF
FIG. 1.

68

EP 0 281 615 B1

Fig. 4.

Fig. 5.

EP 0 281 615 B1

Fig. 6.

Fig. 7.

Fig. 8.

EYE  SCREEN 22  — TO HORIZON

$\theta_y$  $\theta_{j1}$

PIXEL BOUNDARIES

$Z_E$

SCANNING RAY

TERRAIN

$Z_p$

$R_o$

Fig. 9.

EP 0 281 615 B1

EYE

UPPER BOUNDARY
OF THE PIXEL

LOWER BOUNDARY
OF THE PIXEL

TERRAIN

GROUND SURFACE

VOXELS FOR WHICH COLORS ARE
INTEGRATED INTO PIXEL I

Fig. 10.

EP 0 281 615 B1

Fig. 11.

$(X_E, Y_E, Z_E)$

$V_j$

SCREEN 22

d

$Z_E$

$Z_P$

EP 0 281 615 B1

Fig. 12.